(19) Europäisches Patentamt
European Patent Office
Office européen des brevets

(11) **EP 2 542 796 B1**

(12) **EUROPÄISCHE PATENTSCHRIFT**

(45) Veröffentlichungstag und Bekanntmachung des Hinweises auf die Patenterteilung:
**09.04.2014 Patentblatt 2014/15**

(21) Anmeldenummer: **11718889.6**

(22) Anmeldetag: **14.02.2011**

(51) Int Cl.:
***F16D 48/06*** *(2006.01)*

(86) Internationale Anmeldenummer:
**PCT/DE2011/000140**

(87) Internationale Veröffentlichungsnummer:
**WO 2011/107067 (09.09.2011 Gazette 2011/36)**

(54) **VERFAHREN ZUR STEUERUNG EINER REIBUNGSKUPPLUNG UND VORRICHTUNG HIERZU**

METHOD FOR CONTROLLING A FRICTION CLUTCH AND DEVICE THEREFOR

PROCÉDÉ POUR COMMANDER UN EMBRAYAGE À FRICTION ET DISPOSITIF À CET EFFET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2010 DE 102010010138**

(43) Veröffentlichungstag der Anmeldung:
**09.01.2013 Patentblatt 2013/02**

(73) Patentinhaber: **Schaeffler Technologies GmbH & Co. KG**
**91074 Herzogenaurach (DE)**

(72) Erfinder: **REIBOLD, Ekkehard**
**77933 Lahr (DE)**

(56) Entgegenhaltungen:
EP-A2- 2 009 313          DE-A1-102005 057 844
DE-A1-102006 011 350   DE-A1-102008 032 476
DE-A1-102008 041 353   US-A1- 2002 128 763

**Beschreibung**

Die Erfindung betrifft ein Verfahren mit den Merkmalen gemäß dem Oberbegriff des Anspruchs 1 sowie eine Vorrichtung hierzu.

Die Druckschrift US 2002/128763 A1 offenbart ein Verfahren, wonach für unterschiedliche Betriebszustände des Kupplungsaktors unterschiedliche Regelparametersätze verwendet werden, die vom Steuergerät in Abhängigkeit vom Betriebszustand ausgewählt werden. Das Dokument EP 2 009 313 A2 offenbart ein Verfahren zur Adaption einer Kupplungskennlinie, die eine Hystere aufweist, wobei mindestens eine aus der Kennlinie zu erhaltende Kenngröße mit einer entsprechenden gemessenen Kenngröße verglichen wird und falls der Vergleich ergibt, dass zwischen den beiden Kenngrößen eine Abweichung besteht, die größer ist als ein vorbestimmter Wert, eine Angleichung der Kupplungskennlinie vorgenommen wird.

Dokument DE 10 2008 032 476 A1 offenbart ein Verfahren zum Steuern einer Kupplungseinheit, wobei ein Verschleißgrad der Kupplungseinheit ermittelt wird und eine Kennlinie der Reibungskupplung in Abhängigkeit von dem ermittelten Verschleißgrad angepasst wird sowie die Kupplungseinheit mittels des Aktuators gemäß der Kennlinie gesteuert wird.

Verfahren und Vorrichtungen zur automatisierten Steuerung von Reibungskupplungen sind bekannt. Hierbei wird die Reibungskupplung von einem Kupplungsaktor geöffnet und geschlossen, wobei ein Betätigungsglied, beispielsweise eine Tellerfeder oder ein anderes Hebelelement, von dem Kupplungsaktor entlang eines Betätigungswegs axial verlagert wird und damit ein Reibeingriff zwischen der Reibungskupplung und Reibbelägen einer Kupplungsscheibe gesteuert wird. Die Verlagerung des Betätigungsglieds erfolgt beispielsweise mittels einer Vorsteuerung des Betätigungsglieds durch den Kupplungsaktor auf einen einem gewünschten über die Reibungskupplung übertragbaren Sollmoment entsprechenden Sollwert, der von dem Kupplungsaktor in einen entsprechenden Betätigungsweg umgesetzt wird. Dabei erfolgt die Umsetzung des beispielsweise aus Daten des vom Fahrer gewünschten Fahrerwunschmoments und Betriebsdaten der Brennkraftmaschine gebildeten Sollmoments in den Sollwert und damit letztendlich in den Betätigungsweg unter Einsatz einer Kupplungskennlinie. Diese liefert den Zusammenhang zwischen dem Sollmoment und dem Sollwert als adaptierbaren Reibwert und berücksichtigt die sich kurzzeitigen und langzeitigen Änderungen der Reibungskupplung, beispielsweise den Tastpunkt, bei dem die Reibungskupplung beginnt, Moment zu übertragen und das maximal übertragbare Moment bei geschlossener Reibungskupplung. Nach Vorsteuerung des Betätigungsweges wird dieser durch einen Soll-/IstVergleich des Sollwerts mit einem eingelesenen Istwert mittels eines sogenannten Lagereglers geregelt. Die Regelung bei geschlossener Reibungskupplung kann dabei so erfolgen, dass diese nicht komplett geschlossen wird sondern beispielsweise das von der Brennkraftmaschine zur Verfügung gestellte Moment einschließlich eines gegebenenfalls vorgesehenen Sicherheitszuschlags überträgt. Hierbei wird ein geringer Schlupf der Reibungskupplung zugelassen, um beispielsweise Drehmomentspitzen der Brennkraftmaschine zu dämpfen. Aufgabe der Erfindung ist daher die vorteilhafte Weiterbildung von Verfahren zur automatisierten Steuerung von Reibungskupplungen und Vorrichtungen hierzu.

Die Aufgabe wird durch ein Verfahren mit den Merkmalen gemäß Anspruch 1 gelöst. Dazu ist ein Verfahren zur Steuerung einer zwischen einer Brennkraftmaschine und einem Getriebe angeordneten Reibungskupplung mittels eines ein Betätigungsglied der Reibungskupplung entlang eines über eine Kupplungskennlinie einem über die Reibungskupplung übertragbaren Sollmoment zugeordneten Betätigungswegs axial betätigenden Kupplungsaktors vorgesehen, wobei eine zwischen dem Sollmoment und dem über die Reibungskupplung tatsächlich übertragenen Istmoment entlang des Betätigungswegs auftretende Hysterese kompensiert wird, indem ein zur Steuerung des Kupplungsaktors bestimmter Sollwert mittels einer Korrekturgröße korrigiert wird. Der Sollwert wird dabei auf den Kupplungsaktor angewendet, beispielsweise durch Vorgabe eines Betätigungsweges, indem einem elektrisch betriebenen Kupplungsaktor ein entsprechendes Strom- oder Spannungssignal aufgeprägt wird.

Es hat sich gezeigt, dass durch Kompensation einer in dem Kupplungsaktor und in der Reibungskupplung vorhandenen Hysterese unerwünschte Haftungszustände beziehungsweise Drehzahlerhöhungen der Brennkraftmaschine zumindest teilweise vermieden werden können. Eine Hysterese äußert sich durch eine zeitlich verzögerte Einstellung des vorgegebenen Sollwerts wie Betätigungswegs, so dass beispielsweise eine Verminderung des eingestellten Sollmoments von bis zu 15% eintreten kann.

Dabei ist bei einer Steuerung des Sollmoments zu kleineren Sollwerten durch deren zeitliche Verzögerung das über die Reibungskupplung übertragene Moment größer oder im besten Fall gleich dem eingestellten Sollmoment. Eine fehlende Kompensation der Hysterese führt dabei infolge einer Überanpressung zu einem Haften der Reibungskupplung. Kurzzeitig ist ein derartiger Zustand nicht vom Lageregler regelbar, da eine derartige Momentenänderung keine beobachtbare Änderung der erfassbaren Systemgrößen bewirkt. Hierdurch können Triebstrangschwingungen mit damit verbundenen akustischen Einflüssen und Komforteinbußen erzeugt werden, die durch eine entsprechende Kompensation der Hysterese vermieden oder vermindert werden können.

Bei einer Steuerung der Sollwerte zu größeren Sollmomenten mittels der Kompensation der Hysterese kann gegenüber dem Sollmoment ein verringertes und zu Drehzahlerhöhungen führendes, über die Reibungskupplung übertragenes Moment erhöht werden. Im Weiteren wird beispielsweise durch die Anwendung einer Hysteresekompensation die Zuverlässigkeit der Schlupfregelung am Arbeitspunkt der Reibungskupplung verbessert, indem die geringe Modulationsbreite des Sollmoments durch die kompensierten Sollwertvorgaben erhöht und damit die Gesamtverstärkung des Lagereglers geringer gehalten wird, so dass die Schlupfregelung insgesamt stabiler und unempfindlicher gegen Rauschen ausgelegt werden kann.

Es hat sich als vorteilhaft gezeigt, wenn die Korrekturgröße in einem mit relevanten Größen der Reibungskupplung und des Kupplungaktors betriebenen Hysteresemodell ermittelt wird. Hierbei können beispielsweise das anzuwendende Sollmoment, die Geschwindigkeit einer Sollwertänderung, beispielsweise einer Änderung des Betätigungswegs, ein einzustellender Differenzweg, der in der Kupplungskennlinie hinterlegte adaptierte Reibwert, die aktuelle axiale Lage des Betätigungsglieds und/oder dergleichen zur Nachbildung und Modellierung einer sich auf den Sollwert auswirkenden Hysterese in dem Kupplungsaktor und/oder der Reibungskupplung vorgesehen werden. Hierbei beaufschlagt die beispielsweise in dem Hysteresemodell ermittelte Korrekturgröße in Schließrichtung mit einem positiven Offset und in Schließrichtung der Reibungskupplung mit einem negativen Offset, so dass in Schließrichtung das Sollmoment erhöht und in Öffnungsrichtung verringert wird.

Es hat sich gezeigt, dass der Kupplungsaktor eine wegabhängige Hysterese, die beispielsweise über den gesamten Betätigungsweg konstant ist, und die Reibungskupplung eine kraftbeziehungsweise momentenabhängige Hysterese aufweisen können, die mit der Betätigungskraft beziehungsweise mit dem übertragenen Moment zunimmt. In vorteilhafter Weise ist daher die Korrekturgröße abhängig von einem Betätigungsweg zweistufig ausgebildet. Der Betrag der Korrekturgröße kann ausgehend von einem nicht betätigten, an einem Nullpunkt befindlichen Kupplungsaktor mit zunehmendem Betätigungsweg langsam und dann schneller ansteigen, wobei zwei Geraden unterschiedlicher Steigung aneinander gelegt sein können und ein parabolischer, kubischer oder in ähnlicher Weise über den Betätigungsweg ansteigender Verlauf der Korrekturgröße vorgesehen werden kann.

Als besonders vorteilhaft hat sich erwiesen, wenn die Korrekturgröße entlang eines ersten Wegabschnitts des Betätigungsweges bis zu einem Tastpunkt der Reibungskupplung konstant und danach entlang eines zweiten Wegabschnitts des Betätigungswegs ansteigt. Hierdurch kann die im Wesentlichen über den Betätigungsweg konstante Hysterese des Kupplungsaktors kompensiert werden. Ist der Tastpunkt erreicht, wird der Hysterese des Kupplungsaktors die Hysterese der ab dem Tastpunkt Moment übertragenden Reibungskupplung überlagert, die sich mit zunehmendem übertragenem Moment erhöht, so dass diese entsprechend mit einer über den entsprechenden Wegabschnitt beziehungsweise einem diesen zuordenbaren übertragenen Moment, dem angelegten Sollwert und/oder dem zugrundeliegenden Sollmoment ansteigenden Kompensationskurve der Korrekturgröße kompensiert wird. Die Form dieser Kompensationskurve kann eine Gerade, eine Parabel, kubisch, ein an das Hystereseverhalten angepasste und vom Kupplungsverhalten abgeleitete Freiform oder dergleichen sein.

Die Größe der Korrekturgröße gegenüber dem nicht hysteresekompensierten Sollwert kann begrenzt werden, um den Einfluss der Korrekturgröße zu beschränken. Die Beschränkung kann absolut oder relativ und abhängig von einer ermittelten Gesamthysterese erfolgen. Eine Beschränkung der Korrekturgröße kann beispielsweise auf die Hälfte der maximal auftretenden Hysterese erfolgen.

Die Kompensation der Hysterese erfolgt in vorteilhafter Weise durch Überlagerung eines für ein ideales Verfahren ohne Hysterese ausgelegten Sollwerts mit der Korrekturgröße. Dabei werden bevorzugt in Schließrichtung und in Öffnungsrichtung entsprechende Hysteresemodelle angewendet, die beispielsweise entsprechende Hysteresekennlinien bilden. Für die Schließ- und Öffnungsrichtung können die zugrundegelegten Kennlinien der Korrekturgrößen betragsmäßig gleich sein. Alternativ können für die Öffnungsrichtung und Schließrichtung bei unterschiedlichem Hystereseverhalten unterschiedliche Modelle der Kompensation angewendet werden. Derartige Teilkennlinien gehen für den Betätigungsweg in Schließrichtung und für den Betätigungsweg in Öffnungsrichtung der Reibungskupplung von einem Nullpunkt, beispielsweise dem momentanen Arbeitspunkt der Reibungskupplung aus und sind zu diesem gegenläufig ausgebildet. Dies bedeutet, dass bei einer Richtungsumkehr des Betätigungsweges die Korrekturgröße beginnend bei dem Nullpunkt in gegenläufige Richtung angewendet wird.

Gemäß der Erfindung werden in dem Verfahren zur Hysteresekompensation zwei Hystereseäste für den Öffnungs- und Schließvorgang der Reibungskupplung vorgesehen, die jeweils einer von dem Korrekturwert abhängigen Kupplungskennlinie entsprechen und mit jeweils einem vorgegebenen Toleranzbereich versehen sind. Durch die Ausbildung von Toleranzbereichen wird ein Wechseln der Hystereseäste bei kleinen Wegänderungen des Kupplungsaktors vermieden, so dass bei einer Richtungsumkehr des Kupplungsaktors erst in die andere Kupplungskennlinie gewechselt wird, wenn der Toleranzbereich der einen Kupplungskennlinie durch den mittels der Korrekturgröße korrigierte Sollwert überschritten wird. Bei der Auslegung der Hystereseäste in Form von zwei auseinanderfallenden Kupplungskennlinien wird ein Tastpunkt der Reibungskupplung auf der Kupplungskennlinie beziehungsweise dem Hystereseast für die Schließrichtung der Reibungskupplung festgelegt.

Gemäß dem erfinderischen Gedanken kann die Korrekturgröße an ein sich zeitlich änderndes Verhalten des Kupplungsaktors und/oder der Reibungskupplung adaptiert werden. Dabei kann die Korrekturgröße beziehungsweise deren Kennlinie auf einen sich über die Zeit ändernden Arbeitspunkt der Reibungskupplung bei vorzugsweise gleich bleibendem übertragbarem Moment angepasst werden. Beispielsweise kann ein mit einer Korrekturgröße versehener Sollwert mit dem maximal übertragbaren Moment bei vorzugsweise bereits adaptierter Kupplungskennlinie adaptiert werden. Es hat sich als vorteilhaft gezeigt, zuerst eine Adaption der Korrekturgröße beziehungsweise deren Kennlinie in einem Wegbereich, bei der lediglich die Hysterese des Kupplungsaktors wirksam ist, vorzunehmen. Die bei großen Betätigungswegen zusätzlich wirksame Hysterese der Reibungskupplung kann unter Berücksichtigung der adaptierten Hysterese des Kupplungsaktors die Hysterese bei maximalem übertragbaren Moment beziehungsweise maximalem Betätigungsweg adaptieren, indem beispielsweise die dort aus dem anstehenden kompensierten Sollwert im Vergleich mit dem Sollmoment unter Berücksichtigung der adaptierten Kupplungskennlinie beinhaltete Korrekturgröße korrigiert wird.

Die Aufgabe wird in Ergänzung zu dem zuvor beschriebenen Verfahren durch eine Vorrichtung zur Betätigung einer zwischen einer Brennkraftmaschine und einem Getriebe wirksam angeordneten Reibungskupplung mit einem Kupplungsaktor, der ein Betätigungsglied der Reibungskupplung entlang eines Betätigungswegs axial verlagert, und einem Steuergerät zur Steuerung des Kupplungsaktors zur Durchführung des beschriebenen Verfahrens gelöst.

Die Erfindung wird anhand der in den Figuren 1 bis 11 dargestellten Ausführungsbeispiele näher erläutert. Dabei zeigen:

Figur 1 ein Diagramm eines Hysteresemodells mit Kompensation der Hysterese des Kupplungsaktors und der Reibungskupplung,

Figur 2 ein Diagramm zweier Hystereseäste mit Toleranzbereichen,

Figur 3 ein Diagramm eines zweistufigen Hysteresemodells,

Figur 4 ein Flussdiagramm des Hysteresemodells der Figur 3,

Figur 5 ein Blockmodell einer Hysteresekorrektur,

Figur 6 ein Diagramm zur Erläuterung einer Hysteresekompensation,

Figur 7 eine Darstellung einer Kupplungskennlinie mit Reibwertadaption und Hystereseschleifen,

Figur 8 eine statistische Verteilung von Reibwerten einer Reibwertadaption,

Figur 9 ein Flussdiagramm einer Hystereseadaption,

Figur 10 ein Flussdiagramm mit in eine Kupplungssteuerung eingebundener Hysteresekompensation und

Figur 11 ein Flussdiagramm zur Übersicht der Hysteresekompensation.

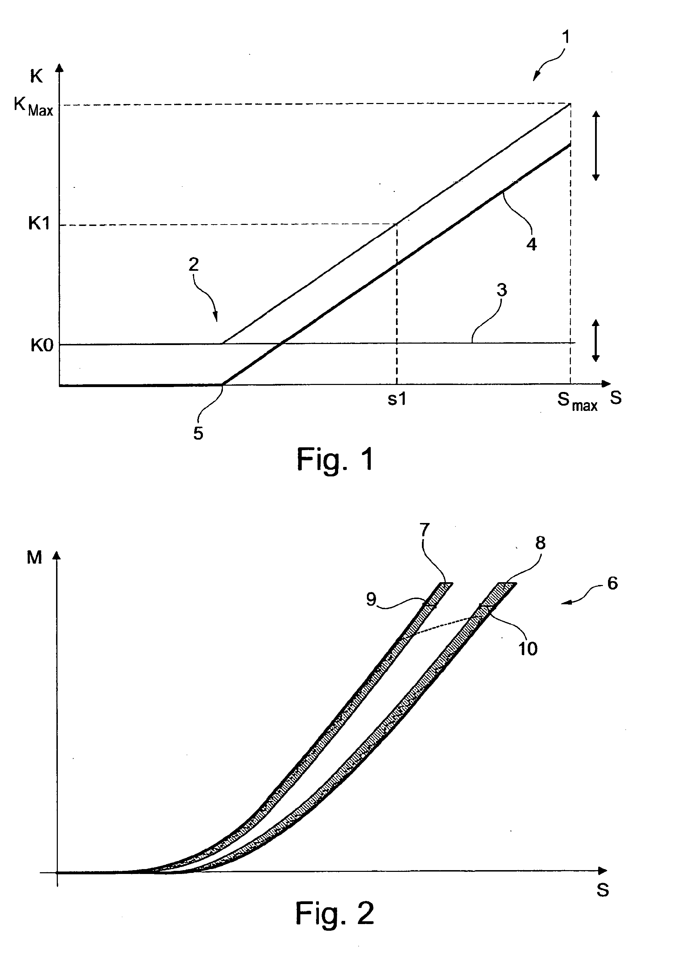

Figur 1 zeigt das Diagramm 1 mit der maximalen Korrekturgröße K über den Betätigungsweg s in eine Betätigungswegrichtung. Die Hysteresekennlinie 2 ist zweiteilig aus einem über den Betätigungsweg s konstanten Anteil 3, der der Hysterese des Kupplungsaktors zuzuordnen ist, und einen beim Tastpunkt 5 der Reibungskupplung, bei dem diese beginnt Moment zu übertragen, einsetzenden mit dem Betätigungsweg zunehmenden Anteil 4 gebildet. Gegenüber dem unkompensierten, ein über die Reibungskupplung zu übertragendes Sollmoment repräsentierenden Sollwert zur Steuerung des Kupplungsaktors wird auf einen beispielsweise vorgegebenen Betätigungsweg s1 die Korrekturgröße K1 als Offset zuschlagen. Die für den Anteil 3 vorgegebene Korrekturgröße K0 ist adaptierbar. Dies bedeutet, dass sie einer Veränderung nachgeführt werden kann. Eine Adaption erfolgt bevorzugt bei kleineren Betätigungswegen s unterhalb des Tastpunktes 5. Für die Adaption kommt eine Auswertung von erfassten oder ermittelten Größen in Frage, die auch zur Adaption des Reibwerts der Kupplungskennlinie verwendet werden, beispielsweise ermittelte Momentenfehler. Alternativ oder zusätzlich kann aus einem Triebstrangbeobachter eine Drehzahl vorausgesagt werden, deren Abweichung von der tatsächlich ermittelten Drehzahl der Brennkraftmaschine oder Getriebeeingangswelle zur Adaption der Korrekturgröße K0 dient. Ist die Adaption des Anteils 3 durch Korrektur des Ordinatenabschnitts erfolgt, kann der Anteil 4 adaptiert werden, indem beispielsweise die maximale Korrekturgröße KMax bei maximalem Betätigungsweg smax und vollständig geschlossener Reibungskupplung mit dem maximalen Sollwert verglichen wird.

Figur 2 zeigt das Diagramm 6 zur Erläuterung der Hysteresekompensation aus Sicht der Darstellung des über die Reibungskupplung übertragenen Moments M über den Betätigungsweg s. Hierbei wird jeweils eine Kupplungskennlinie 7, 8 mit Toleranzbereichen 9, 10 versehen, beide Kupplungskennlinien 7, 8 sind gegeneinander um einen vorgegebenen Hysteresebereich (K aus Figur 1) entlang des Betätigungswegs s versetzt. Die Kupplungskennlinie 8 ist für die Schließrichtung der Reibungskupplung vorgegeben und gibt für jeden Momentenwert einen entsprechenden, dem Toleranzbereich 10 entsprechenden Betätigungswegbereich vor. In derselben Weise ist die Kupplungskennlinie 7 in Öffnungsrichtung vorgesehen. Es versteht sich, dass je nach Ausbildung der Reibungskupplung als durch den Kupplungsaktor zwangsweise geschlossene oder zwangsweise geöffnete Reibungskupplung die Kennlinien 7, 8 wechseln.

Durch die Ausbildung der Toleranzbereiche 9, 10 werden die die Teilhystereseschleifen begrenzenden Hystereseäste der Kupplungskenninien 7, 8 verbreitert, so dass zur Ausbildung der Adaption mehrere Datenpunkte zur Verfügung stehen. Die Adaption der Korrekturgrößen erfolgt in dem gezeigten Ausführungsbeispiel unter Berücksichtigung der Toleranzbereiche 9, 10.

Die Tastpunktadaption des Tastpunktes erfolgt in vorteilhafter Weise auf die für den Schließvorgang der Reibungskupplung vorgesehene Kupplungskennlinie 8, so dass der Tastpunkt ohne zusätzliche Hysterese beim Schließen der Reibungskupplung angefahren werden kann, wobei ein Anlegeschlag zwischen "Kupplung offen" und "Kupplung überträgt Moment" vermieden werden soll. Vielmehr soll ein weicher Übergang angestrebt werden. Da eine wegabhängige Hysterese des Kupplungsaktors bei der ersten Inbetriebnahme des Kupplungsaktors am Bandende noch nicht bekannt ist, kann der Tastpunkt als realer, auf der Kennlinie 8 liegender Messpunkt in einfacher Weise gelernt werden. Für den komfortablen Betrieb der Reibungskupplung ist der Hystereseast wie Kupplungskennlinie 8 zum Schließen der Reibungskupplung infolge eines genau positionierbaren Anlegens der Reibungskupplung an den Tastpunkt zur Vermeidung eines spürbaren Anlegeschlags und eines exakt einstellbaren Kriechens durch Anlegen einer entsprechenden Korrekturgröße von größerer Bedeutung als der Hystereseast zur Öffnung der Reibungskupplung. Aus wirtschaftlichen Gründen und/oder zur Vereinfachung der Rechenleistung kann gegebenenfalls auf eine Kompensation der Reibungskupplung während des Öffnens der Reibungskupplung verzichtet werden.

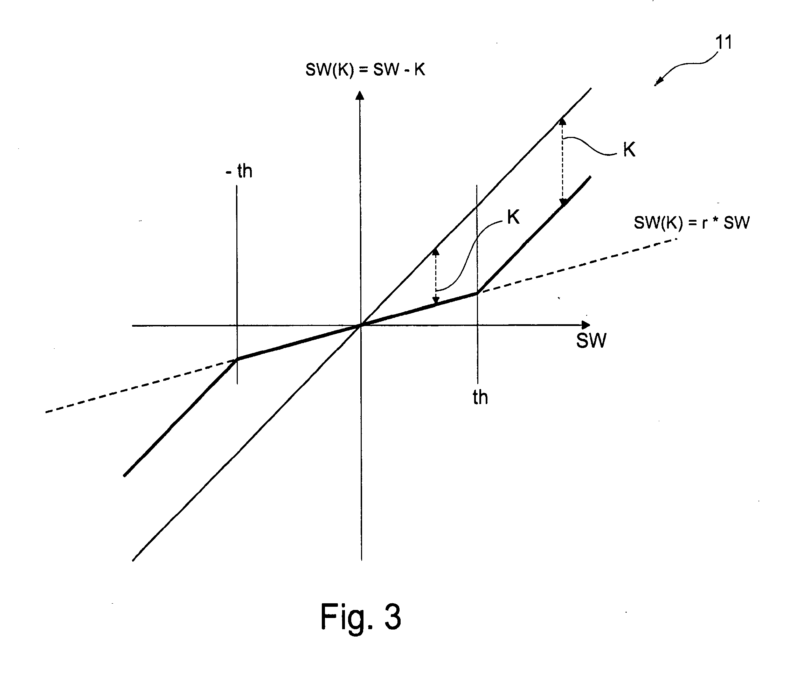

Figur 3 zeigt das Diagramm 11 eines-gegenüber der Figur 1 geänderten und verändert dargestellten Hysteresemodells zur Bestimmung des Teilscheifen- und Vollschleifenverhaltens, bei dem der unkompensierte Sollwert SW gegen den mit der Korrekturgröße kompensierten Sollwert SW(K) aufgetragen ist. Dabei zeigt die Winkelhalbierende des Koordinatensystems in Form der idealen, hysteresefreien Sollwertlinie 12 ohne Hysterese. Der kompensierte Sollwert SW(K) ist bei großen Werten gegenüber der hysteresefreien Sollwertlinie 12 reduziert, beispielsweise auf den durch den Doppelpfeil 13 dargestellten halben Wert der Gesamthysterese hy. Das dargestellte Koordinatensystem ist ein bewegtes Koordinatensystem, dessen Nullpunkt sich entlang der Achse des Betätigungswegs s verlagern lässt.

Erfolgt eine Richtungsumkehr des Kupplungsaktors wird das Koordinatensystem mathematisch an den Arbeitspunkt der Reibungskupplung verlagert, so dass der Nullpunkt des Koordinatensystems - je nach Richtung in Schließ- oder Öffnungsrichtung der Reibungskupplung - mit einer der Hystereseschwellen th zur Deckung gebracht wird. Die willkürlich gewählte Verhältnisgröße r beschreibt das Verhältnis zwischen Ausgangssignal der kompensierten Sollwerte SW(K) und Eingangssignal SW zwischen den beiden Hystereseschwellen -th und th. Die Verhältnisgröße ist hier in Form einer Geraden mit einer bevorzugten Steigung größer 0,5 festgelegt. Daraus ergibt sich für die Hystereseschwelle th:

$$th = hy \ / \ (2*(1-r)).$$

Eine derartige Koordinatentransformation lässt sich beispielsweise algorithmisch in einer Softwareroutine einfach darstellen, wobei die Verlagerung des Koordinatensystems derart erfolgt, dass der Sollwert SW (= mf) im bewegten Koordinatensystem zwischen den beiden Hystereseschwellen th, -th begrenzt wird. Aus dieser Beschränkung ergibt sich für die Korrekturgröße K :

$$K = (1-r) \ * \ mf$$

Hierdurch erfolgt automatisch eine Anpassung der Korrekturgröße bei Verlassen eines vorgegebenen Sollwertbereiches während einer Richtungsumkehr. Die Korrekturgröße K kann als Kennfeld in einen Softwarealgorithmus implementiert werden und kann keine unphysikalischen Werte liefern. Es wird kein Vergleich mit realen Messgrößen benötigt und kann keine unzulässigen Werte annehmen.

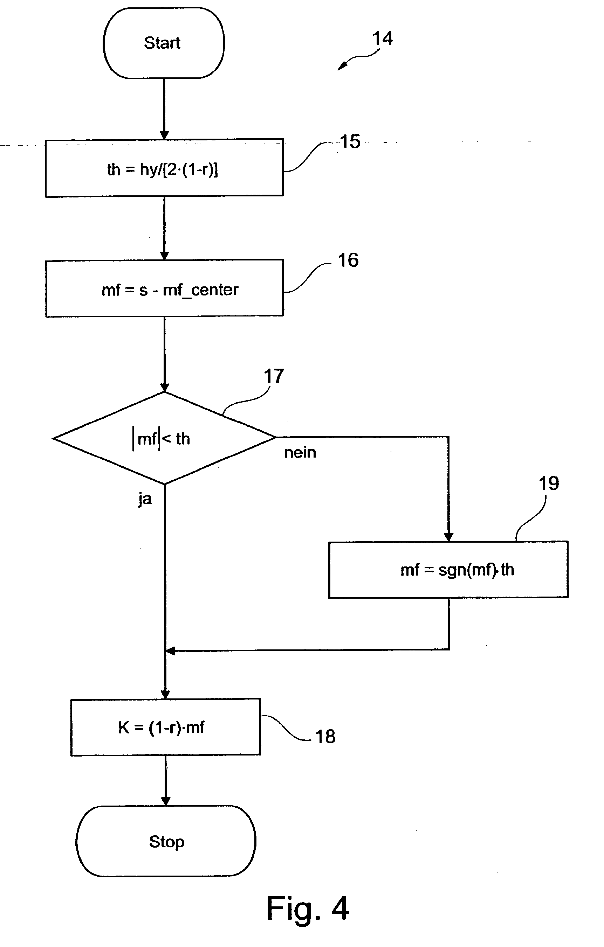

Figur 4 zeigt ein mögliches Ausführungsbeispiel als Flussdiagramm 14 zur Umsetzung des Hysteresemodells der Figur 3. Nach dem Start wird in Block 15 die Hystereseschwelle th abhängig von der Gesamthysterese hy, die abhängig von dem eingestellten Betätigungsweg und/oder dem über die Reibungskupplung übertragenen Moment ist, und der Verhältnisgröße r eingestellt. In Block 16 wird der neue Sollwert SW (= mf) im bewegten Koordinatensystem als Differenz von Betätigungsweg s und aktuellen Nullpunkt mf_center des bewegten Koordinatensystems berechnet. In der Verzweigung 17 wird geprüft, ob der Betrag des Sollwerts SW kleiner als die Hystereseschwelle th ist. Ist dies der Fall, wird in Block 18 die Korrekturgröße K ermittelt und in der Steuerroutine des Kupplungsaktors auf den Sollwert aufgeschlagen. Ist der Betrag des Sollwerts SW größer als die Hystereseschwelle th wird der Sollwert SW in Block 19 begenzt und der Nullpunkt des Koordinatensystems um den Begrenzungswert verschoben. Dies bedeutet, dass das Koordinatensystem der Figur 3 dem Betätigungsweg s oder möglichen anderen Eingangssignalen, beispielsweise dem Sollmoment, dem Sollweg oder entsprechenden Ist-Werten, nachgeführt wird.

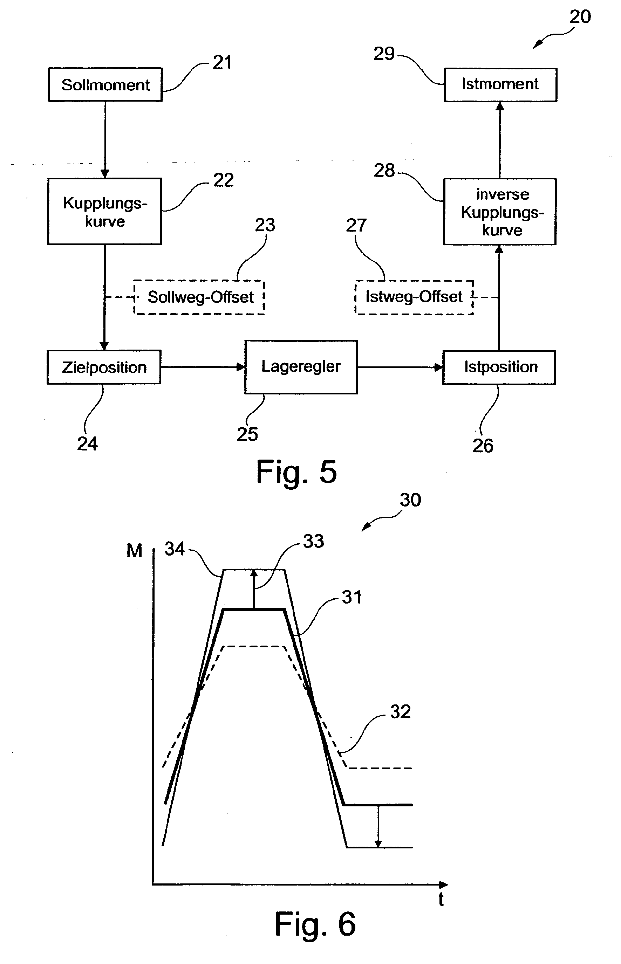

Figur 5 zeigt das Flussdiagramm 20, das den Ablauf der Steuerung eines Kupplungsaktors wiedergibt. In Block 21 wird das über die Reibungskupplung zu übertragende Sollmoment ermittelt, beispielsweise aus Daten der Brennkraftmaschine, dem beispielsweise über ein Fahrpedal zur Verfügung stehenden Fahrerwunschmoment und dergleichen. Über die Kupplungskurve wie Kupplungskennlinie in Block 22 erfolgt die Zuordnung des Sollmoments zu einem Sollwert für den Betätigungsweg der Reibungskupplung. In Block 23 wird dem Sollwert die Korrekturgröße zu Hysteresekompensation - hier als Sollweg-Offset - aufgeschlagen und vom Kupplungsaktor gesteuert in Block 24 die Zielpositon des Betätigungswegs angefahren. Der Lageregler in Block 25 regelt die vorgesteuerte Position und hält diese bei äußeren Einflüssen. In Block 26 wird beispielsweise mittels entsprechender Sensorik der Istwert - hier in Form der Istposition des Kupplungsaktors beziehungsweise der von diesem zurückgelegte Istweg - ermittelt. Nach Abzug eines Ist-Weg-Offsets in Block 27 wird der bezüglich der Hysterese unkompensierte Istwert in Block 28 einer Rückbildung durch eine inverse Kupplungskurve unterzogen, die in Block 29 das Istmoment liefert, das mit dem Sollmoment des Blocks 21 verglichen und damit das Sollmoment gegebenenfalls adaptiert werden kann.

Zum nominellen Sollweg wird ein Sollweg-Offset aus einem Soll-Modell addiert. Vom Istweg wird dann ein Istweg-Offset aus einem Ist-Modell subtrahiert. Bei langsamen Veränderungen des Betätigungswegs, bei dem der Istweg dem Sollweg folgt, kürzen sich Soll- und Ist-Korrektur im Wesentlichen heraus und die Istmomente folgen den Sollmomenten. Bei schnelleren Veränderungen können Soll- und Ist-Offset durchaus unterschiedlich oder gar gegenphasig sein. Die Adaption der Kupplungskennlinie (Kupplungskurve), die auf Basis der Istmomente erfolgt, wird nicht unmittelbar durch die Offsets des Hysteresemodells beeinflusst. Der Adaption wird quasi ein "geschöntes" Kupplungsverhalten vorgespielt. Es versteht sich, dass die Einwirkung des Hysteresemodells bereits auf der Ebene des Sollmoments in die Steuerung des Kupplungsaktors implementiert werden kann.

Das Diagramm 30 der Figur 6 zeigt den zeitlichen Verlauf einer Momentenänderung des über die Reibungskupplung übertragbaren Moments M in Abhängigkeit von der Zeit t während einer Betätigung der Reibungskupplung entlang des Betätigungswegs des Kupplungsaktors. Durch eine langsame Bewegung des Kupplungsaktors folgt der erzielte Ist-Weg dem Soll-Weg sofort, so dass in dem gezeigten Diagramm 30 der Ist-Weg im Wesentlichen dem Soll-Weg entspricht. Die durchgezogene Linie 31 zeigt dabei die unkompensierte Sollvorgabe ohne Hysteresekompensation. Das hysteresebehaftete Moment ist in Form der gestrichelten Linie 32 gezeigt. Die Adaption der Kupplungskennlinie basiert dabei auf einer Ist-Wert-Erfassung und erkennt in diesem Fall bei einer Momentenerhöhung einen zu großen und bei Momentenabsenkung einen zu niedrigen Adaptionswert, beispielsweise einen in der Kupplungskennlinie vorgesehenen, adaptierbaren Reibwert.

Wird nun die Korrekturgröße in Form des Pfeils 33 zum Sollwert zugeschlagen wie addiert, die unbeobachtet von einer entsprechenden Adaptionsroutine ist, so fährt die Reibungskupplung weiter in Schließrichtung als dies dem ursprünglichen Sollmoment entspricht, wie dies in der durchgezogenen Linie 34 gezeigt ist. Ist das Hysteresemodell korrekt abgestimmt, so fällt das an der Reibungskupplung eingestellte Moment mit dem beim langsamen Durchfahren der Momentenänderung in Linie 31 und damit mit dem Sollmoment zusammen. Zur Richtigstellung der Vorgänge in der gesamten Steuerroutine des Kupplungsaktors muss das ermittelte Istmoment um den gleichen Betrag der Korrekturgröße des Hysteresemodells korrigiert werden, damit Ist-und Sollwerte einhergehen.

Ist das Hysteresemodell zu schwach eingestellt, so sind die Korrekturgröße zu klein und die Adaptionsroutine der Kupplungskennlinie zeigt weiterhin das obige Verhalten. Ist die Korrekturgröße zu groß, erkennt die Adaptionsroutine bei einer Momentenerhöhung einen zu kleinen Reibwert und bei Momentenabsenkung einen zu großen.

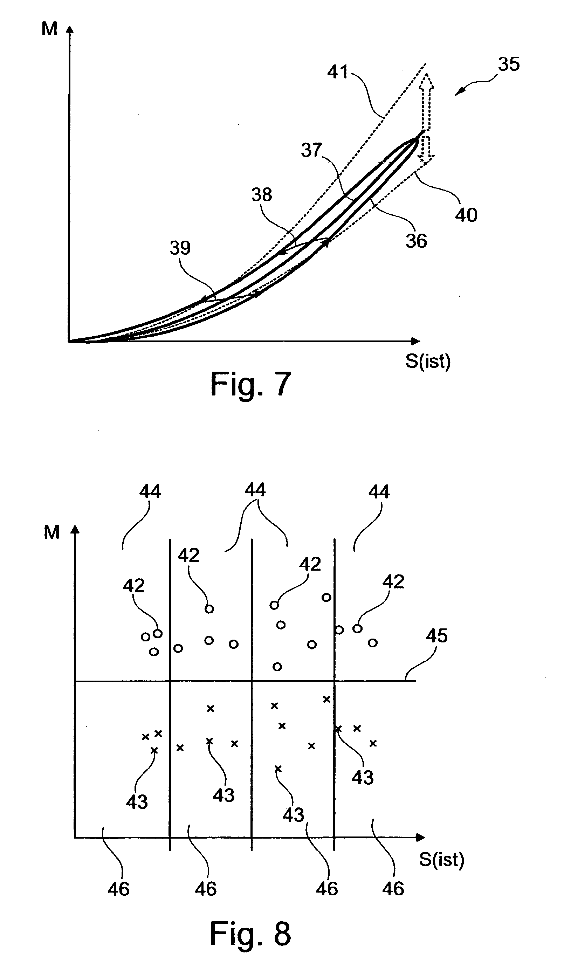

Figur 7 zeigt das Diagramm 35 des nicht hysteresekompensierten Moments M über den Istweg s(ist) mit der idealen, nicht hysteresebehafteten Kupplungskennlinie 37 und der realen, hysteresebehafteten Kupplungskennlinie 36. Wird die Kupplungskennlinie 36 nicht über den gesamten Istweg verfahren, treten Teilhystereseschleifen auf, die durch die Pfeile 38, 39 gekennzeichnet sind und bei denen eine Richtungsumkehr der Hysterese stattfindet. Die gestrichelte Kupplungskennlinie 40 wird bei einer Reibwertadaption nach einem wesentlichen Momentenanstieg aus der Kupplungskennlinie 37 und die Kupplungskennlinie 41 nach einer wesentlichen Momentenemiedrigung adaptiert. Unter einer wesentlichen Änderung ist hierbei eine Momentenänderung zu verstehen, bei der der Teilschleifenbereich verlassen wird und sich das Moment an die Kupplungskennlinie 36 anschmiegt. Es wird deutlich, dass ohne Hysteresekompensation alle adaptierten Kupplungskennlinien bei Momentenanstiegen unterhalb der idealen Kupplungskennlinie 37 und alle adaptierten Kennlinien bei Momentenemiedrigung oberhalb der idealen Kupplungskennlinie 37 liegen.

Bei einer Anwendung eines Hysteresemodells wird auf den Sollwert wie Sollposition bei Momentenerhöhung die Korrekturgröße aufgeschlagen, so dass das nominelle Moment der Kupplungskennlinie 37 erreicht wird. Eine Adaption der Kupplungskennlinie 37 führt dann nicht mehr zu einer Änderung der idealen Kupplungskennlinie 37. Entsprechend ist das Verhalten des Hysteresemodells bei einer Momentenabsenkung.

Figur 8 zeigt eine statistische Verteilung von auf ein Moment M adaptierten Reibwerten 42, 43 über den Istweg s(ist). Entsprechend den Istwegen kann eine Adaption auf Momentenwerte erfolgen. Die als diskrete Punkte dargestellten, ermittelten Reibwerte 42, 43 werden in Adaptionsbereiche 44, 46 eingeteilt, bei denen sich jeweils die Art der Kompensation der Hysterese ändert, beispielsweise einem Wechsel in eine andere Kompensationsstufe bei einem mehrstufigen Hysteresemodell.

Die Angabe der adaptierten Reibwerte beschränkt sich auf Werte, die die Hystereseschwelle th, -th (Figur 3) überschritten haben. Dabei werden die einzelnen Reibwerte 42, 43 zusätzlich durch die Trennlinie 45 getrennt und damit den verschiedenen Hystereseschwellen th, - th und damit diskret der Schließ- und Öffnungsrichtung der Reibungskupplung zugeordnet. Ist in einem Adaptionsbereich 44 die Differenz zwischen den Erwartungswerten mit VZ(mf) = +1 und VZ(mf) = -1 des Verlagerungswerts mf größer als die Summe der entsprechenden Standardabweichungen, dann muss die Gesamthysterese in diesem Bereich vergrößert werden.

Ist in einem Adaptionsbereich 44, 46 die Differenz zwischen den Erwartungswerten der Reibwerte in Schließ- und Öffnungsrichtung größer als die Summe der entsprechenden Standardabweichungen, dann wird die Gesamthysterese in diesem Adaptionsbereich verkleinert. Falls in einen Adaptionsbereich 44, 46 über längere Zeit nicht adaptiert wird, wird der Korrekturwert der Hysterese kontinuierlich zwischen den angrenzenden Adaptionsbereichen interpoliert beziehungsweise in einen oder beide benachbarte Adaptionsbereiche extrapoliert. Desweiteren können allgemein Kontinuitäts- und Monotonitätsbetrachtungen in die Adaption einfließen. Da bei viel zu groß angenommener Hysterese kaum noch adaptiert werden kann, sollte als Sicherheit die Gesamthysterese zeitlich dekrementiert werden, um eine endliche Wiederkehrwahrscheinlichkeit zu gewährleisten.

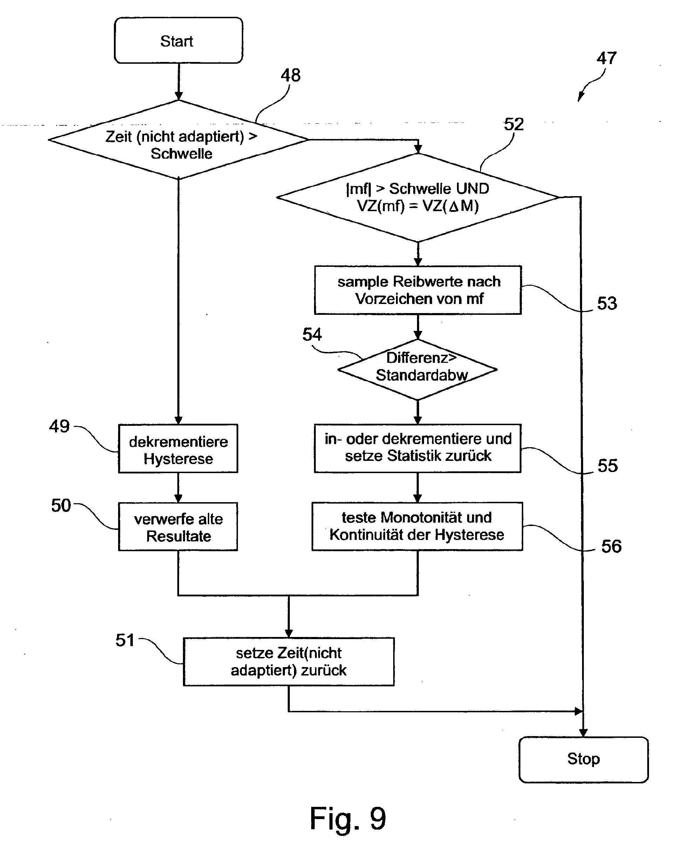

Die Figur 9 zeigt das Flussdiagramm 47, das eine mögliche Routine zur Adaption des Hysteresemodells, beispielsweise über den Betätigungsweg anzuwendende Korrekturgrößen beschreibt. Nach dem Start wird in der Verzweigung 48 die Dauer seit der letzten Adaption abgefragt. Überschreitet die Dauer eine vorgegebene Schwelle, werden in Block 49 die Hysterese dekrementiert und in Block 50 gespeicherte Adaptionsdaten verworfen. In Block 51 wird die Zeit zur Wiederholung der Adaption neu gestartet und die Routine anschließend beendet und gegebenenfalls neu gestartet.

Ist die Dauer der Adaption innerhalb der gesetzten Schwelle werden in der Verzweigung 52 die Erfordernisse für eine Adaption nach den statistischen Vorgaben der Figur 8 geprüft. Sind die Bedingungen für eine Adaption nicht erfüllt, wird die Routine beendet.

Überschreitet der Verlagerungswert mf eine vorgegebene Schwelle und entsprechen die Erwartungswerte VZ(mf) des Verlagerungswerts mf den Erwartungswerten VZ(ΔM) der zugehörigen Momentenänderungen, sind die Adaptionskriterien erfüllt und die Reibwerte werden in Block 53 entsprechend der Figur 8 statistisch klassifiziert. In der Verzweigung 54 wird bei Vorliegen der Reibwerte innerhalb der Standardabweichung die Routine beendet. Bei signifikanter Abweichung der Reibwerte werden in Block 55 die ermittelten Abweichungen der Adaption zugrundegelegt und in Block 56 Monotonitäts- und Kontinuitätskriterien des Hysteresemodells getestet und über Block 51 die Routine beendet.

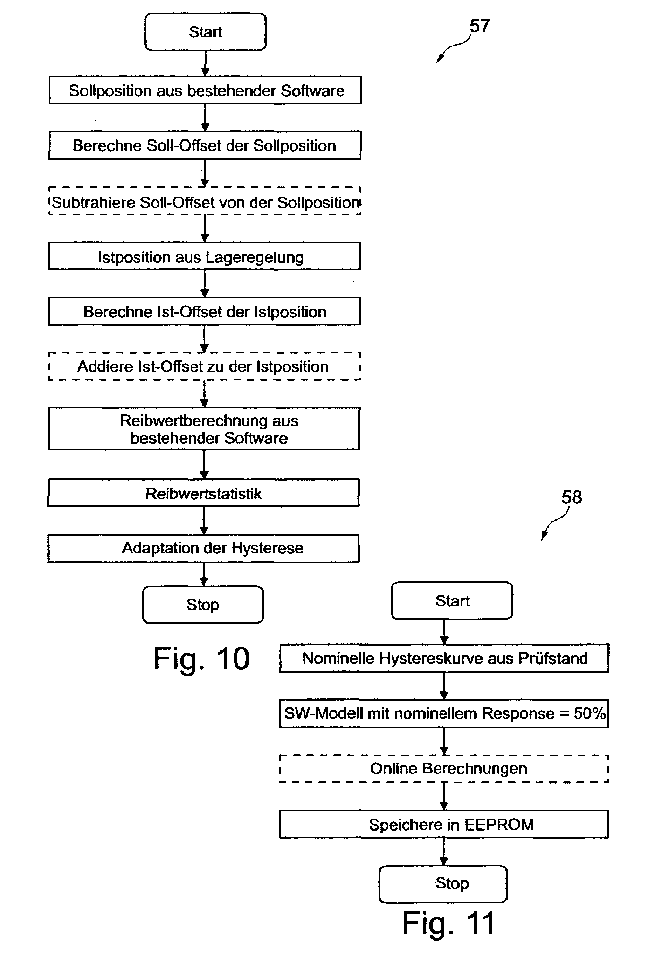

Figur 10 zeigt das Flussdiagramm 57 einer parallel zu der übrigen Routine zur Steuerung des Kupplungsaktors ablaufenden Routine zur Festlegung einer Korrekturgröße eines Hysteresemodells. Die dick umrandeten beziehungsweise gestrichelt dargestellten Blöcke zeigen dabei einen Datenaustausch mit der Routine zur Steuerung des Kupplungsaktors. Im Einzelnen wird aus der bestehenden Software die aus der Kupplungskennlinie und dem Sollmoment ermittelte Sollposition eingelesen, aus der der Soll-Offset in Form der Korrekturgröße aus dem eingestellten Hysteresemodell, beispielsweise dem Hysteresemodell der Figuren 1 und 3 berechnet wird. Die Korrekturgröße wird von der Sollposition je nach Momentenänderung subtrahiert oder addiert. Anschließend wird die Istposition des Kupplungsaktors eingelesen und der hysteresebedingte Offset aus der Istposition eliminiert. Die nachfolgende Reibwertberechnung wird der Reibwertstatistik unterworfen und gegebenenfalls anschließend die Hysterese beziehungsweise die Korrekturgröße dieser adaptiert.

Figur 11 zeigt ein Ausführungsbeispiel zur Erstellung einer Routine zur Kompensation der Hysterese in Form des Flussdiagramms 58 mit den in den nachfolgenden Blöcken dargestellten Aufgaben. Im Einzelnen sind dies in absteigender Reihenfolge das Einlesen einer Hysteresekurve, beispielsweise aus empirisch gewonnenen Daten eines Prüfstands, die Abbildung dieser Daten in einem Hysteresemodell (SW-Modell), das bevorzugt eine Verhältnisgröße r = 50% verwendet, Berechnungen der Hysteresedaten der in Betrieb befindlichen automatisierten Reibungskupplung, beispielsweise erste Adaptionsvorgänge und Abspeichern der ersten Betriebsdaten in einem nichtflüchtigen Speicher (EEPROM) des Steuergeräts.

## Bezugszeichenliste

| 1 | Diagramm |
|---|---|
| 2 | Hysteresekennlinie |
| 3 | Anteil |
| 4 | Anteil |
| 5 | Tastpunkt |
| 6 | Diagramm |
| 7 | Kupplungskennlinie |
| 8 | Kupplungskennlinie |
| 9 | Toleranzbereich |
| 10 | Toleranzbereich |
| 11 | Diagramm |
| 12 | hysteresefreie Sollwertlinie |
| 13 | Doppelpfeil |
| 14 | Flussdiagramm |
| 15 | Block |
| 16 | Block |
| 17 | Verzweigung |
| 18 | Block |
| 19 | Block |
| 20 | Flussdiagramm |
| 21 | Block |
| 22 | Block |
| 23 | Block |
| 24 | Block |

| 25 | Block |
|----|-------|
| 26 | Block |
| 27 | Block |
| 28 | Block |
| 29 | Block |
| 30 | Diagramm |
| 31 | Linie |
| 32 | Linie |
| 33 | Pfeil |
| 34 | Linie |
| 35 | Diagramm |
| 36 | Kupplungskennlinie |
| 37 | Kupplungskennlinie |
| 38 | Pfeil |
| 39 | Pfeil |
| 40 | Kupplungskennlinie |
| 41 | Kupplungskennlinie |
| 42 | Reibwert |
| 43 | Reibwert |
| 44 | Adaptionsbereich |
| 45 | Trennlinie |
| 46 | Adaptionsbereich |
| 47 | Flussdiagramm |
| 48 | Verzweigung |
| 49 | Block |
| 50 | Block |
| 51 | Block |
| 52 | Verzweigung |
| 53 | Block |
| 54 | Verzweigung |
| 55 | Block |
| 56 | Block |
| 57 | Flussdiagramm |
| 58 | Flussdiagramm |
| $\Delta$in | Änderung Eingangssignal |
| $\Delta$m | Änderung Verlagerungsbetrag |
| hy | Gesamthysterese |
| K | Korrekturgröße |
| K0 | Korrekturgröße |
| K1 | Korrekturgröße |
| KMax | maximale Korrekturgröße |
| M | Moment |
| mf | Sollwert SW innerhalb des bewegten Koordinatensystems |
| mf_center | Nullpunkt des bewegten Koordinatensystems |
| r | Verhältnisgröße |
| s | Betätigungsweg |
| s1 | Betätigungsweg |
| s(ist) | Istweg |
| smax | maximaler Betätigungsweg |
| SW | Sollwert (= mf) |
| SW(K) | kompensierter Sollwert |
| t | Zeit |
| th | Hystereseschwelle |
| hy | Gesamthysterese |
| VZ($\Delta$M) | Erwartungswert Momentenänderung |
| VZ(mf) | Erwartungswert Verlagerungswert |

**Patentansprüche**

1. Verfahren zur Steuerung einer zwischen einer Brennkraftmaschine und einem Getriebe angeordneten Reibungskupplung mittels eines ein Betätigungsglied der Reibungskupplung entlang eines über eine Kupplungskennlinie einem über die Reibungskupplung übertragbaren Sollmoment zugeordneten Betätigungswegs (s) axial betätigenden Kupplungsaktors, wobei eine zwischen dem Sollmoment und dem über die Reibungskupplung tatsächlich übertragenen Istmoment entlang des Betätigungswegs auftretende Hysterese kompensiert wird, indem ein zur Steuerung des Kupplungsaktors bestimmter Sollwert (SW) des Betätigungswegs mittels einer Korrekturgröße (K) korrigiert wird, wobei für den Betätigungsweg in Schließrichtung und für den Betätigungsweg in Öffnungsrichtung der Reibungskupplung von einem Nullpunkt ausgehende, gegenläufige Kennlinien für die Korrekturgröße vorgesehen sind, **dadurch gekennzeichnet, dass** für den Öffnungs- und Schließvorgang der Reibungskupplung jeweils eine von dem Korrekturwert (K) abhängige Kupplungskennlinie (7,8) mit jeweils einem vorgegebenen Toleranzbereich (9, 10) gebildet wird, so dass bei einer Richtungsumkehr des Kupplungsaktor erst in die andere Kupplungskennlinie gewechselt wird, wenn der Toleranzbereich der einen Kupplungskennlinie durch den mittels der Korrekturgröße Korrigierten Sollwert überschritten wird, und wobei ein Tastpunkt (5) der Reibungskupplung auf der Kupplungskennlinie (8) für die Schließrichtung der Reibungskupplung festgelegt wird.

2. Verfahren nach Anspruch 1, **dadurch gekennzeichnet, dass** die Korrekturgröße (K) in einem mit relevanten Größen der Reibungskupplung und des Kupplungaktors betriebenen Hysteresemodell ermittelt wird.

3. Verfahren nach Anspruch 1 oder 2, **dadurch gekennzeichnet, dass** die Korrekturgröße (K) abhängig von einem Betätigungsweg (s) zweistufig ausgebildet ist.

4. Verfahren nach Anspruch 3, **dadurch gekennzeichnet, dass** die Korrekturgröße (K) entlang eines ersten Wegabschnitts des Betätigungsweges (s) bis zu einem Tastpunkt (5) der Reibungskupplung konstant ist und danach entlang eines zweiten Wegabschnitts des Betätigungswegs (s) ansteigt.

5. Verfahren nach Anspruch 3, **dadurch gekennzeichnet, dass** die Korrekturgröße (K) entlang eines ersten Wegabschnitts des Betätigungsweges (s) bis zu einem Tastpunkt (5) der Reibungskupplung konstant ist und mit zunehmendem übertragbarem Moment ansteigt.

**6.** Verfahren nach Anspruch 1, **dadurch gekennzeichnet, dass** bei einer Richtungsumkehr des Betätigungsweges die Korrekturgröße beginnend bei dem Nullpunkt in gegenläufige Richtung angewendet wird.

**7.** Verfahren nach einem der Ansprüche 1 bis 6, **dadurch gekennzeichnet, dass** die Korrekturgröße (K) an ein sich zeitlich änderndes Verhalten des Kupplungsaktors und/oder der Reibungskupplung adaptiert wird.

**8.** Verfahren nach Anspruch 7, **dadurch gekennzeichnet, dass** die Korrekturgröße (K) an einen sich über die Zeit ändernden Arbeitspunkt der Reibungskupplung angepasst wird.

**9.** Vorrichtung zur Betätigung einer zwischen einer Brennkraftmaschine und einem Getriebe wirksam angeordneten Reibungskupplung mit einem Kupplungsaktor, der ein Betätigungsglied der Reibungskupplung entlang eines Betätigungswegs (s) axial verlagert, und einem Steuergerät zur Steuerung des Kupplungsaktors das eingerichtet ist zur Durchführung des Verfahrens nach einem der Ansprüche 1 bis 8.

**Claims**

**1.** Method for controlling a friction clutch which is arranged between an internal combustion engine and a transmission, by means of a clutch actuator which axially activates an activation element of the friction clutch along an activation travel (s), assigned via a clutch characteristic curve to a setpoint torque which can be transmitted via the friction clutch, wherein a hysteresis occurring along the activation travel, between the setpoint torque and the actual torque actually transmitted via the friction clutch, is compensated in that a setpoint value (SW), intended for controlling the clutch actuator, of the activation travel is corrected by means of a correction variable (K), wherein opposing characteristic curves for the correction variable, which start from a zero point, are provided for the activation travel in the closing direction and for the activation travel in the opening direction of the friction clutch, **characterized in that** in each case a clutch characteristic curve (7, 8) which is dependent on the correction value (K) is formed with, in each case, a predefined tolerance range (9, 10) for the opening process and the closing process of the friction clutch, with the result that in the event of a reversal of direction of the clutch actuator changing over into the other clutch characteristic curve occurs only when the tolerance range of the one clutch characteristic curve is exceeded by the setpoint value corrected by means of the correction variable, and wherein a bite point (5) of the friction clutch on the clutch characteristic curve (8) is defined for the closing direction of the friction clutch.

**2.** Method according to Claim 1, **characterized in that** the correction variable (K) is determined in a hysteresis model which is operated with relevant variables of the friction clutch and of the clutch actuator.

**3.** Method according to Claim 1 or 2, **characterized in that** the correction variable (K) is embodied in two stages as a function of an activation travel (s).

**4.** Method according to Claim 3, **characterized in that** the correction variable (K) is constant along a first travel section of the activation travel (s) up to a bite point (5) of the friction clutch and subsequently rises along a second travel section of the activation travel (s).

**5.** Method according to Claim 3, **characterized in that** the correction variable (K) is constant along a first travel section of the activation travel (s) up to a bite point (5) of the friction clutch and rises as the transmissible torque increases.

**6.** Method according to Claim 1, **characterized in that** in the event of a reversal of direction of the activation travel the correction variable is applied in the opposite direction starting at the zero point.

**7.** Method according to one of Claims 1 to 6, **characterized in that** the correction variable (K) is adapted to a behaviour of the clutch actuator and/or of the friction clutch which changes over time.

**8.** Method according to Claim 7, **characterized in that** the correction variable (K) is adapted to a working point of the friction clutch which changes over time.

**9.** Device for activating a friction clutch, effectively arranged between an internal combustion engine and a transmission, with a clutch actuator which axially moves an activation element of the friction clutch along an activation travel (s), and a control device for controlling the clutch actuator, which is configured to carry out the method according to one of Claims 1 to 8.

**Revendications**

**1.** Procédé de commande d'un accouplement à friction disposé entre un moteur à combustion interne et une boîte de vitesses au moyen d'un actionneur d'accouplement qui actionne un élément d'actionnement de l'accouplement à friction dans le sens axial le long d'une course d'actionnement (s) associée par le biais d'une courbe caractéristique d'accouplement à un couple de consigne pouvant être transmis par l'accouplement à friction, une hystérésis qui se produit le long de la course d'actionnement entre le couple de consigne et le couple effectif réellement transmis par le biais de l'accouplement à friction étant compensée en corrigeant au moyen d'une grandeur de correction (K) une valeur de consigne (SW) de la course d'actionnement déterminée pour commander l'actionneur d'accouplement, des courbes caractéristiques opposées pour la grandeur de correction étant prévues pour la course d'actionnement dans le sens de la fermeture et pour la course d'actionnement dans le sens de l'ouverture de l'accouplement à friction à partir d'un point mort, **caractérisé en ce qu'**une courbe caractéristique d'accouplement (7, 8) dépendant de la valeur de correction (K) et ayant à chaque fois une plage de tolérances prédéfinie (9, 10) est à chaque fois formée pour l'opération d'ouverture et de fermeture de l'accouplement à friction, de sorte que lors d'une inversion de sens de l'actionneur d'accouplement, le changement à l'autre courbe caractéristique d'accouplement n'a lieu que lorsque la plage de tolérances de l'une des courbes caractéristiques est dépassée par la valeur de consigne corrigée au moyen de la grandeur de correction, et un point de mesurage (5) de l'accouplement à friction étant défini sur la courbe caractéristique d'accouplement (8) pour le sens de la fermeture de l'accouplement à friction.

2. Procédé selon la revendication 1, **caractérisé en ce que** la grandeur de correction (K) est déterminée dans un modèle d'hystérésis fonctionnant avec des grandeurs pertinentes de l'accouplement à friction et de l'actionneur d'accouplement.

3. Procédé selon la revendication 1 ou 2, **caractérisé en ce que** la grandeur de correction (K) est formée en deux étapes en fonction d'une course d'actionnement (s).

4. Procédé selon la revendication 3, **caractérisé en ce que** la grandeur de correction (K) est constante le long d'une première portion de course de la course d'actionnement (s) jusqu'à un point de mesurage (5) de l'accouplement à friction et augmente ensuite la long d'une deuxième portion de course de la course d'actionnement (s).

5. Procédé selon la revendication 3, **caractérisé en ce que** la grandeur de correction (K) est constante le long d'une première portion de course de la course d'actionnement (s) jusqu'à un point de mesurage (5) de l'accouplement à friction et augmente à mesure que le couple pouvant être transmis croît.

6. Procédé selon la revendication 1, **caractérisé en ce que** lors d'une inversion de sens de la course d'actionnement, la grandeur de correction est utilisée en sens inverse en commençant par le point mort.

7. Procédé selon l'une des revendications 1 à 6, **caractérisé en ce que** la grandeur de correction (K) est adaptée à un comportement qui varie dans le temps de l'actionneur d'accouplement et/ou de l'accouplement à friction.

8. Procédé selon la revendication 7, **caractérisé en ce que** la grandeur de correction (K) est adaptée à un point de fonctionnement qui varie dans le temps de l'accouplement à friction.

9. Dispositif pour actionner un accouplement à friction disposé de manière active entre un moteur à combustion interne et une boîte de vitesses avec un actionneur d'accouplement qui déplace un élément d'actionnement de l'accouplement à friction dans le sens axial le long d'une course d'actionnement (s), et un contrôleur pour commander l'actionneur d'accouplement, lequel est conçu pour mettre en oeuvre le procédé selon l'une des revendications 1 à 8.

Fig. 1

Fig. 2

Fig. 3

Start

14

th = hy/[2·(1-r)]

15

mf = s - mf_center

16

17

|mf| < th

nein

ja

mf = sgn(mf)·th

19

K = (1-r)·mf

18

Stop

## Fig. 4

Fig. 5

Fig. 6

Fig. 7

Fig. 8

Start

48

Zeit (nicht adaptiert) >
Schwelle

47

52

|mf| > Schwelle UND
VZ(mf) = VZ(ΔM)

sample Reibwerte nach
Vorzeichen von mf

53

54

Differenz>
Standardabw

49

dekrementiere
Hysterese

in- oder dekrementiere und
setze Statistik zurück

55

50

verwerfe alte
Resultate

teste Monotonität und
Kontinuität der Hysterese

56

51

setze Zeit(nicht
adaptiert) zurück

Stop

# Fig. 9

Start

Sollposition aus bestehender Software

Berechne Soll-Offset der Sollposition

Subtrahiere Soll-Offset von der Sollposition

Istposition aus Lageregelung

Berechne Ist-Offset der Istposition

Addiere Ist-Offset zu der Istposition

Reibwertberechnung aus
bestehender Software

Reibwertstatistik

Adaptation der Hysterese

Stop

57

**Fig. 10**

58

Start

Nominelle Hystereskurve aus Prüfstand

SW-Modell mit nominellem Response = 50%

Online Berechnungen

Speichere in EEPROM

Stop

**Fig. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2002128763 A1
- EP 2009313 A2

- DE 102008032476 A1